Europäisches Patentamt

European Patent Office

Office européen des brevets

(19)

(11)  EP 0 926 170 B1

(12)  **FASCICULE DE BREVET EUROPEEN**

(45)  Date de publication et mention
de la délivrance du brevet:
**15.09.2004  Bulletin 2004/38**

(51)  Int Cl.⁷: **C08F 222/10**, C08F 230/08,
C09D 4/00

(21)  Numéro de dépôt: **98402763.1**

(22)  Date de dépôt: **06.11.1998**

(54)  **Compositions silico-acryliques, procédé de préparation et application pour l'obtention de revêtements durcissables thermiquement ou par rayonnement**

Siliko-Acrylzusammensetzungen, Verfahren zur Herstellung sowie Verwendung als thermisch oder durch Stahlung härtbare Beschichtungen

Silico-acrylic compositions, process of preparation and use as coatings which can be hardened either thermally or by irradiation

(84)  Etats contractants désignés:
**AT BE DE DK FI FR GB IT NL SE**

(30)  Priorité:  **23.12.1997  FR 9716321**

(43)  Date de publication de la demande:
**30.06.1999  Bulletin 1999/26**

(73)  Titulaire: **Clariant (France) S.A.**
**92800 Puteaux (FR)**

(72)  Inventeurs:
• **Jacquinot, Eric**
**60350 Trosly Breuil (FR)**

• **Eranian, Armand**
**92400 Courbevoie (FR)**

(74)  Mandataire: **Santarelli**
**14, avenue de la Grande Armée,**
**B.P. 237**
**75822 Paris Cedex 17 (FR)**

(56)  Documents cités:
EP-A- 0 317 858      EP-A- 0 565 403
EP-A- 0 607 710      US-A- 5 232 964

## Description

La présente invention concerne des compositions silico-acryliques, fluides, transparentes et incolores comme l'eau, stables dans le temps, polymérisables thermiquement ou par rayonnement, par mécanisme radicalaire, à très faible teneur en eau et en solvants volatils, leur procédé de préparation et leur application pour l'obtention de revêtements résistants à l'abrasion et aux rayures.

Les polymères organiques synthétiques et plus particulièrement les polymères organiques transparents à la lumière solaire tels que certaines résines (méth) acryliques ou téréphtaliques sont limités dans leur développement par leur faible résistance à l'abrasion et leur tendance à se rayer. Afin d'obvier à ces inconvénients, il est souvent proposé de les protéger par un revêtement anti-rayure et anti-abrasion obtenu par photopolymérisation, en présence d'un photo-amorceur, d'un film d'une composition aqueuse ou non aqueuse, contenant des particules de silice, un ou plusieurs monomères acryliques polymérisables, et éventuellement, un ou plusieurs silanes. Parmi ces dernières compositions, on peut citer entre autres, celles décrites dans les brevets US-A-4.348.462, 4.455.205, 4.478.876, 4.486.504, 4.491.508, 4.822.828, 5.260.350, 5.374.483, 5.232.964 et EP-A-317.858.

Selon EP-A-317.858, on prépare des compositions en milieu solvant contenant un condensat partiel de silice colloïdale avec un silane dont au moins 60 % est du type vinylsilane, un monomère de type multi (meth)acrylate, de préférence soluble dans l'eau, et un alcanol inférieur, de préférence l'isopropanol. C'est ce mélange en milieu solvant qui est appliqué sur des films synthétiques pour obtenir des revêtements résistants à l'abrasion. Ces compositions contiennent des quantités relativement importantes de solvant qu'il faut évaporer à l'utilisation.

Selon US-A-5.232.964, on prépare une composition qui forme un revêtement transparent, teintable et résistant à l'abrasion après durcissement aux radiations, comprenant au moins un monomère acrylate multifonctionnel, un silane, de la silice colloïdale dispersée dans un solvant, et un sel d'ammonium quaternaire qui apporte la teintabilité.

Quoique les compositions décrites dans ces documents permettent d'obtenir des revêtements présentant tant sur le plan de la protection contre l'abrasion et les rayures, que sur le plan de l'adhérence, de bonnes performances, on recherche encore actuellement des compositions présentant des qualités encore améliorées notamment en ce qui concerne les coûts, la fluidité et la stabilité. Or, la demanderesse a découvert des compositions fluides, transparentes et incolores comme l'eau, stables dans le temps, polymérisables thermiquement ou par rayonnement, par mécanisme radicalaire, à forte concentration en silice, à très faible teneur en eau et en solvants volatils, donnant après polymérisation un revêtement dur, adhésif et présentant une bonne résistance à l'abrasion et aux rayures.

La présente invention concerne donc des compositions silico-acryliques fluides, transparentes et incolores comme l'eau, stables dans le temps, polymérisables thermiquement ou par rayonnement, par mécanisme radicalaire, à très faible teneur en eau et en solvants volatils, contenant de la silice, un silane et un monomère acrylique multifonctionnel, caractérisées par le fait que la silice est sous la forme de particules individualisées, d'un diamètre moyen compris entre 5 et 100 nm, non liées entre elles par des liaisons siloxanes, que le silane est un vinylsilane de formule (I)

$$H_2C=CH - Si (OR)_3 \qquad (I)$$

dans laquelle R représente un radical méthyle ou éthyle, que le monomère acrylique multifonctionnel est le diacrylate de tripropylène glycol désigné TPGDA et par le fait qu'elles sont transparentes et incolores comme l'eau et stables dans le temps.

Dans le système de la présente invention le terme polymérisable sous rayonnement indique que le revêtement peut être durci sous rayonnement ultra-violet en présence d'un photo-amorceur ou sous faisceaux d'électrons sans nécessité de photo-amorceur, et le terme polymérisable thermiquement indique que le revêtement peut être durci par traitement thermique en présence d'un catalyseur radicalaire.

L'invention a plus particulièrement pour objet des compositions telles que définies ci-dessus, caractérisées en ce qu'elles contiennent de 5 à 60 % en poids de silice.

Parmi ces dernières compositions, l'invention a notamment pour objet les compositions caractérisées en ce qu'elles contiennent préférentiellement de 25 à 35 % en poids de silice sous forme de particules individualisées, non liées entre elles par des liaisons siloxanes, et présentant un diamètre moyen compris entre 5 et 100 nm, préférentiellement entre 10 et 50 nm.

Parmi les compositions ci-dessus, on peut citer plus particulièrement celles caractérisées par le fait qu'elles contiennent, par m$^2$ de silice, de 0,01 millimole à 0,1 millimole de vinylsilane de formule (I).

Les compositions selon l'invention sont stables dans le temps. En effet, on constate que, dans des conditions optimales de stockage appropriées, c'est à dire à l'abri de la chaleur et de la lumière, 6 mois après la préparation du produit, on a toujours une solution claire, transparente et incolore.

On ne constate pas de sédimentation de la silice, ni de formation de gels à partir de la silice ou des silanes. On ne constate pas l'apparition de phénomène de voile ou trouble.

Les compositions selon l'invention sont également fluides. Leur viscosité Brookfield, déterminée à 20°C avec un appareil Brookfield RVT à 780tr/mn est inférieure à 200 mPa.s. Elles sont également quasiment exemptes d'eau et de solvants volatils. Elles contiennent pondéralement moins de 1,5 % et de préférence au plus 1,2 % d'eau.

Les compositions selon l'invention sont miscibles avec les solvants organiques eux-mêmes miscibles avec le TPGDA. Elles peuvent évidemment être diluées avec du TPGDA, de manière à diminuer, si désiré, leur concentration en silice.

Selon l'invention, les compositions telles que définies ci-dessus peuvent être préparées par un procédé caractérisé en ce que l'on mélange, à la température ambiante, sous agitation, un sol aqueux de silice acide contenant la quantité et le grade de silice désirés, la quantité de vinylsilane de formule (I) choisie, la quantité de TPGDA désirée et de l'alcool isopropylique, désigné IPA, de façon à ce que la quantité de vinylsilane de formule (I) soit comprise entre 0,01 millimole et 0,1 millimole par m$^2$ de silice utilisée, puis en ce que l'on soumet ce mélange à une distillation sous pression réduite et sous agitation, à une température inférieure à 50°C, jusqu'à l'élimination de l'eau et des solvants volatils, pour obtenir une composition selon l'invention.

La présente demande a encore pour objet des compositions ci-dessus, caractérisées en ce qu'elles peuvent être obtenues en mélangeant à la température ambiante, sous agitation, un sol aqueux de silice acide dans lequel la silice est sous la forme de particules individualisées, d'un diamètre moyen compris entre 5 et 100 nm, non liées entre elles par des liaisons siloxanes, ledit sol contenant la quantité de diacrylate de tripropylèneglycol désirée et de l'alcool isopropylique, puis en soumettant ce mélange à une distillation sous pression réduite et sous agitation, à une température inférieure à 50°C jusqu'à l'élimination de l'eau et des solvants volatils.

Les particules de silice, après élimination de l'eau et des solvants volatils, perdent leur caractère hydrophile et peuvent être dispersées dans du TPGDA. La stabilité des compositions selon l'invention est surprenante et elle est particulièrement avantageuse pour leur utilisation.

En effet, il est très intéressant industriellement de pouvoir obtenir des compositions exemptes de solvant et qui restent stables dans le temps. Ce but a été atteint en réglant la quantité de vinylsilane de formule (I) en fonction de la quantité de silice utilisée, et plus particulièrement de la superficie des particules de silice colloïdale utilisée.

Des essais ont été effectués par la demanderesse vers d'autres monomères acrylates multifonctionnels mais les compositions obtenues n'étaient pas stables dans le temps, car présentant d'abord un phénomène de trouble puis de gélification au bout de quelques semaines.

Selon l'invention, le sol aqueux de silice acide est préparé extemporanément par traitement selon les techniques connues avec une résine échangeuse d'ions sous forme acide, d'un sol aqueux de silice commerciale basique, présentant un pH de 8 à 10.

Ces sols aqueux de silice sont disponibles dans le commerce, ils sont notamment commercialisés par la demanderesse sous le nom de KLEBOSOL®.

Les sols aqueux de silice utilisés dans l'invention contiennent jusqu'à 60 % en poids de silice, sous la forme de particules individualisées, d'un diamètre moyen compris entre 5 et 100 nm, non liées entre elles par des liaisons siloxanes, de pH compris entre 1 et 3 et de préférence de 2 environ. Il est connu que la plupart des sols de silice sont formés de particules sphériques individualisées de silice amorphe, non poreuse, l'intérieur des particules de silice consiste en de la silice anhydre de masse volumique 2,2 g/cm$^3$ (The Chemistry of Silica. R.K. Iler - Wiley Interscience 1979 p 7).

Dans l'hypothèse où les particules consistent en de la silice amorphe de masse volumique 2,2 g/cm$^3$ on sait qu'il existe une relation simple entre le diamètre (d) exprimé en nanomètres et la surface spécifique (S) exprimée en m$^2$ par gramme. Cette relation est :

$$S = \frac{2720}{d}$$

(The Chemistry of Silica. R.K. Iler - Wiley Interscience 1979 p.465)

Selon l'invention, les vinylsilanes de formule (I), et le TPGDA sont des produits commerciaux.

Le TPGDA est notamment commercialisé par la Société CRAY VALLEY sous la marque SARTOMER ® 306, par la Société UCB/RADCURE sous le nom TPGDA ou par la Société AKROS sous la marque ACTILANE ® 424.

Le vinyltriméthoxysilane et le vinyltriéthoxysilane sont commercialisés par la Société HÜLS respectivement sous la marque commerciale Dynasilan VTMO et Dynasilan VTEU et par la Société WITCO respectivement sous la marque commerciale SILQUEST A-171 et SILQUEST A-151.

Les compositions selon l'invention présentent d'intéressantes propriétés en raison notamment de leur concentration élevée en silice, de leur fluidité, de leur transparence et absence de couleur comme l'eau et de leur stabilité dans le temps. Elles peuvent être aisément déposées sur différents types de support précédemment décrits, et durcies par mécanisme radicalaire thermiquement ou par rayonnement (UV ou faisceau d'électrons) conduisant à la formation d'un film mince ayant une bonne adhésion au support et une bonne résistance à l'abrasion et aux rayures, ce qui les rend particulièrement utiles pour l'élaboration de revêtements protecteurs transparents et incolores.

La limpidité des compositions résulte vraisemblablement en premier lieu de la très faible différence d'indice de réfraction n entre l'indice de réfraction de la silice (n = 1,46) et celui du TPGDA (n =1,45)

Les compositions selon l'invention possédant des particules de silice de diamètre compris entre 10 et 50 nm, sont donc particulièrement intéressantes pour obtenir des vernis anti-rayures sur les plastiques transparents tels que les verres d'optique ou les matériaux plastiques transparents utilisables dans le bâtiment et sur d'autres substrats (matières plastiques non transparentes, verre, bois, métal).

Les exemples suivants illustrent la présente invention. Dans ces exemples, les dosages d'eau ont été effectués par la méthode de Karl Fischer et les taux de silice ont été déterminés par calcination à 1000°C d'un échantillon de poids connu.

EXEMPLE 1

On mélange sous agitation, à la température ambiante :

- 833 g d'un sol de silice acide, fraîchement préparé, contenant pondéralement 70 % d'eau, soit 583,1 g d'eau et 30 % de silice, soit 249,9 g de silice, sous forme de particules individualisées, d'un diamètre moyen de 25 nm, non liées entre elles par des liaisons siloxanes et présentant un pH =2,
- 4182 g d'alcool isopropylique, soit 717 % en poids par rapport à l'eau du sol de silice aqueux,
- 442 g de diacrylate de tripropylène glycol soit 1,47 mole de TPGDA
- 109 g de vinyltriméthoxysilane, soit 0,0273 millimole de silane par $m^2$ de silice.

Le mélange réactionnel ainsi obtenu est soumis ensuite à une distillation sous une pression réduite d'environ 115 mbars en maintenant la température du bain extérieur à environ 42°C. Après environ 3 heures de distillation, on porte progressivement la température du bain extérieur à 46 ± 1°C et la pression à 20 mbars et l'on poursuit la distillation pendant 30 minutes, puis on casse la pression réduite et on refroidit le milieu réactionnel à la température ambiante.

On obtient ainsi une solution claire, limpide, transparente, incolore comme l'eau et stable dans le temps, contenant pondéralement 37 % de silice et 0,84 % d'eau et présentant une viscosité Brookfield de 100 mPa.s., déterminée à 20°C, à la vitesse de 780 tr/mn.

On constate que dans des conditions de stockage appropriées, c'est à dire à l'abri de la chaleur et de la lumière, au bout de 6 mois après la préparation du produit, on a toujours une solution claire, limpide, transparente, incolore comme l'eau et stable, c'est à dire que l'on ne constate pas de phénomène de voile ou de trouble (haze en anglais), on a toujours une solution homogène, même après six mois de stockage dans des conditions énoncées précédemment.

EXEMPLE 2

On mélange sous agitation, à la température ambiante :

- 833 g d'un sol de silice acide, fraîchement préparé, contenant pondéralement, 70 % d'eau , soit 583,1 g d'eau et 30 % de silice sous forme de particules individualisées , soit 249,9 g de silice, d'un diamètre moyen de 25 nm, non liées entre elles par des liaisons siloxanes et présentant un pH = 2,
- 4182 g d'alcool isopropylique, soit 717 % en poids par rapport à l'eau du sol de silice aqueux,
- 442 g de diacrylate de tripropylène glycol, soit 1,47 mole de TPGDA
- 218 g de vinyltriméthoxysilane, soit 0,0546 millimole de silane par $m^2$ de silice.

Le mélange réactionnel ainsi obtenu est traité comme dans l'exemple 1.

On obtient ainsi une solution claire, limpide, transparente, incolore comme l'eau et stable dans le temps, contenant pondéralement 43 % de silice et 0,43 % d'eau, et présentant une viscosité Brookfield de 90 mPa.s. déterminée à 20°C, à la vitesse de 780 tr/mn.

On constate comme dans l'exemple 1, que l'on obtient toujours une solution claire, limpide, transparente, incolore comme l'eau et stable dans le temps, même après six mois de stockage dans des conditions appropriées à l'abri de la chaleur et de la lumière.

EXEMPLE 3

On mélange sous agitation, à température ambiante :

- 833 g d'un sol de silice acide, fraîchement préparé, contenant pondéralement, 70 % d'eau , soit 583,1 g d'eau et 30 % de silice sous forme de particules individualisées , soit 249,9 g de silice, d'un diamètre moyen de 12 nm, non liées entre elles par des liaisons siloxanes et présentant un pH = 2,
- 4182 g d'alcool isopropylique, soit 717 % en poids par rapport à l'eau du sol de silice aqueux,
- 442 g de diacrylate de tripropylène glycol, soit 1,47 mole de TPGDA
- 218 g de vinyltriméthoxysilane, soit 0,0262 millimole de silane par $m^2$ de silice.

Le mélange réactionnel ainsi obtenu est traité comme dans l'exemple 1.

On obtient ainsi une solution claire, limpide, transparente, incolore comme l'eau et stable dans le temps, contenant pondéralement 38 % de silice et 1,2 % d'eau et présentant une viscosité Brookfield de 90 mPa.s. déterminée à 20°C, à la vitesse de 780 tr/mn.

On constate comme dans l'exemple 1, que l'on obtient toujours une solution claire, limpide, transparente, incolore comme l'eau et stable dans le temps, même après six mois de stockage dans des conditions appropriées à l'abri de la chaleur et de la lumière.

EXEMPLE 4

Exemple d'utilisation de formulations selon l'invention pour la réalisation de revêtements transparents et incolores comme l'eau résistants à l'abrasion et à la rayure.

a) On prépare tout d'abord la formulation suivante par mélange à température ambiante de 20°C

- 30 parties en poids d'organosol de silice de l'exemple 1
- 70 parties en poids d'un oligomère polyéther acrylate modifié amine, par exemple l'oligomère CN 551 de Cray Valley.
- 3 parties en poids d'un mélange 1/1 en poids de 1-hydroxy-cydohexylphénylcétone et de benzophénone, par exemple l'Irgacure 500 de Ciba Geigy.

b) On dépose le mélange ainsi obtenu sur un support de verre à raison d'environ 50 g/m$^2$. Le support de verre ainsi revêtu est placé sur un convoyeur qui se déplace à une vitesse de 25 mètres par minute, le revêtement étant irradié par un rayonnement ultra-violet provenant d'une lampe Fusion-Systems d'une puissance de 120 W/cm.

c) La résistance à l'abrasion du revêtement ainsi durci a été évaluée par le test d'abrasion Taber avec deux meules abrasives CS 17 et un poids appliqué sur chacune d'elles de 1000 g. Après 1000 cycles on obtient ainsi une perte de poids de 7 mg.

Avec la même formulation sans organosol de silice de l'exemple 1, dans les mêmes conditions opératoires, on obtient une perte de poids de 30 mg. On constate donc une très nette amélioration de la résistance à l'abrasion.

d) Avec le test qualitatif à la paille de fer, on observe une très bonne amélioration de la résistance à la rayure du revêtement contenant l'organosol de l'exemple 1 par rapport au revêtement sans organosol.

**Revendications**

1. Compositions silico-acryliques, fluides, transparentes et incolore comme l'eau, stables dans le temps, polymérisables thermiquement ou par rayonnement, par mécanisme radicalaire, contenant de la silice, un silane et un monomère acrylique multifonctionnel, **caractérisées par le fait qu'**elles sont à teneur en eau inférieure à 1,5 % et à très faible teneur en solvants volatils, que la silice est sous la forme de particules individualisées, d'un diamètre moyen compris entre 5 et 100 nm, non liées entre elles par des liaisons siloxanes, que le silane est un vinylsilane de formule (I)

$$H_2C=CH - Si(OR)_3 \qquad (I)$$

dans laquelle R représente un radical méthyle ou éthyle, **par le fait que** le monomère acrylique multifonctionnel est le diacrylate de tripropylène glycol désigné TPGDA, **par le fait que** la quantité de vinylsilane de formule (I) est comprise entre 0,01 millimole et 0,1 millimole par m$^2$ de silice utilisée.

2. Compositions selon la revendication 1, **caractérisées en ce qu'**elles contiennent de 5 à 60 % en poids de silice.

3. Compositions selon la revendication 2, **caractérisées en ce qu'**elles contiennent de 25 à 35 % en poids de silice.

4. Compositions selon l'une des revendications 1 à 3, **caractérisées en ce qu'**elles contiennent de la silice sous forme de particules individualisées, non liées entre elles par des liaisons siloxanes, ayant un diamètre moyen compris entre 10 et 50 nm.

5. Compositions selon l'une des revendications 1 à 4, **caractérisées en ce qu'**elles peuvent être obtenues en mélangeant à la température ambiante, sous agitation, un sol aqueux de silice acide dans lequel la silice est sous la forme de particules individualisées, d'un diamètre moyen compris entre 5 et 100 nm, non liées entre elles par des liaisons siloxanes, ledit sol contenant la quantité de vinylsilane de formule (I) choisie, la quantité de diacrylate de tripropylèneglycol désirée et de l'alcool isopropylique, puis en soumettant ce mélange à une distillation sous pression réduite et sous agitation, à une température inférieure à 50°C jusqu'à l'élimination de l'eau et des solvants volatils.

6. Procédé de préparation d'une composition selon l'une quelconque des revendications 1 à 5, **caractérisé en ce que** l'on mélange, à la température ambiante, sous agitation, un sol aqueux de silice acide contenant la quantité et le grade de silice désirés, la quantité de vinylsilane de formule (I) choisie, la quantité désirée de diacrylate de tripropylène glycol, et de l'alcool isopropylique, puis **en ce que** l'on soumet ce mélange à une distillation sous pression réduite et sous agitation, à une température inférieure à 50°C jusqu'à l'élimination de l'eau et des solvants volatils.

**7.** Procédé selon la revendication 6, **caractérisé en ce que** le sol aqueux de silice présente un pH de 1 à 3.

**8.** Utilisation d'une composition selon l'une quelconque des revendications 1 à 5 pour l'élaboration de revêtements transparents et incolores, protecteurs contre l'abrasion, obtenus par polymérisation radicalaire par rayonnement ou thermiquement.

**9.** Utilisation d'une composition selon l'une quelconque des revendications 1 à 5 pour l'élaboration de vernis anti-rayures transparents et incolores obtenus par polymérisation radicalaire par rayonnement ou thermiquement.

**Patentansprüche**

**1.** Flüssige, transparente, wasserartig-farblose Silikoacryl-Zusammensetzungen, zeitlich stabil, thermisch oder durch Strahlung über radikalische Mechanismen polymerisierbar, enthaltend Kieselerde, ein Silan und ein multifunktionelles acrylisches Monomer, **dadurch gekennzeichnet, daß** sie sehr wenig Wasser(unter 1,5%) und flüchtige Lösungsmittel enthalten, daß die Kieselerde in Form einzelner Partikel mit mittlerem Durchmesser zwischen 5 und 100 nm vorliegt, die untereinander nicht durch Siloxanbindungen verbunden sind, daß das Silan ein Vinylsilan der Formel (I) ist

$$H_2C=CH-Si(OR)_3, \qquad (I)$$

in der R ein Methyl- oder Ethyl-Rest ist, wobei das multifunktionelle Acrylmomomer Tripropylenglykol-Diacrylat, genannt TPGDA, ist, wobei die Menge des Vinylsilan der Formel (I) zwischen 0,01 Millimol und 0,1 Millimol pro m$^2$ benutzte Kieselerde beträgt.

**2.** Zusammensetzungen gemäß Anspruch 1, **dadurch gekennzeichnet, daß** sie 5 bis 60 Gew.% Kieselerde enthalten.

**3.** Zusammensetzungen gemäß Anspruch 2, **dadurch gekennzeichnet, daß** sie 25 bis 35 Gew.% Kieselerde enthalten.

**4.** Zusammensetzungen gemäß einem der Ansprüche 1 bis 3, **dadurch gekennzeichnet, daß** sie die Kieselerde in der Form einzelner Partikel enthalten, die nicht durch Siloxanbindungen miteinander verbunden sind, und einen mittleren Durchmesser zwischen 10 und 50 nm aufweisen.

**5.** Zusammensetzungen gemäß einem der Ansprüche 1 - 4, **dadurch gekennzeichnet, daß** sie erhalten werden können durch Vermischen, bei Umgebungstemperatur unter Rühren, eines wäßrigen Sols aus saurer Kieselerde, in der die Kieselerde in Form einzelner Partikel mit mittlerem Durchmesser zwischen 5 und 100 nm vorkommt, die untereinander nicht durch Siloxanbindungen verbunden sind, wobei das Sol die Menge Vinylsilan der gewählten Formel (I) enthält, der gewünschten Menge Tripropylenglykol-Diacrylat und Isopropylalkohol, dann Destillieren des Gemisches unter reduziertem Druck und unter Rühren, bei einer Temperatur unter 50°C bis zur Abspaltung des Wassers und der flüchtigen Lösungsmittel.

**6.** Verfahren zum Herstellen einer Zusammensetzung gemäß mindestens einem der Ansprüche 1 bis 5, **dadurch gekennzeichnet, daß** man bei Umgebungstemperatur unter Rühren ein wäßriges Sol aus saurer Kieselerde, der die Menge und den Grad der gewünschten Kieselerde enthält, die Menge Vinylsilan der gewählten Formel (I), die gewünschten Menge Tripropylenglykol-Diacrylat und Isopropylalkohol mischt, dann unter reduziertem Druck und unter Rühren dieses Gemisch bei einer Temperatur unter 50°C bis zur Abspaltung des Wassers und der flüchtigen Lösungsmittel destilliert.

**7.** Verfahren gemäß Anspruch 6, **dadurch gekennzeichnet, daß** der wäßrige Kieselerdesol einen pH von 1 bis 3 aufweist.

**8.** Verwendung einer Zusammensetzung gemäß mindestens einem der Ansprüche 1 bis 5 zur Herstellung von transparenten und farblosen, abriebfesten Schutzbeschichtungen, die durch radikalische Polymerisation mittels Bestrahlung oder auf thermischem Weg erhalten werden.

**9.** Verwendung einer Zusammensetzung gemäß mindestens einem der Ansprüche 1 bis 5 zur Herstellung von kratzfestem, durchsichtigem und farblosem Firnis, der durch radikalartige Polymerisation mittels Bestrahlung oder auf thermischem Weg erhalten wird.

**Claims**

**1.** Silicoacrylic compositions which are fluid, transparent, colorless as water, and stable over time, and polymerizable thermally or by radiation, by a radical mechanism, containing silica, a silane and a multifunctional acrylic monomer, **characterized by** the fact that they have a very low water content (less than 1.5%) and volatile solvent content, that the silica is in the form of individualized particles, of average diameter between 5 and 100 nm, not linked together with siloxane bonds, that the silane is a vinylsilane of formula (I)

$$H_2C=CH-Si(OR)_3 \qquad (I)$$

in which R represents a methyl or ethyl radical, that the multifunctional acrylic monomer is tripropylene glycol diacrylate designated TPGDA, and that the quantity of vinylsilane of formula I is between 0.01 millimole and 0.1 millimole per $m^2$ of silica used.

2. Compositions according to claim 1, **characterized in that** they contain 5 to 60 % by weight of silica.

3. Compositions according to claim 2, **characterized in that** they contain 25 to 35 % by weight of silica.

4. Compositions according to one of claims 1 to 3, **characterized in that** they contain silica in the form of individualized particles, not linked together with siloxane bonds, having an average diameter between 10 and 50 nm.

5. Compositions according to one of claims 1 to 4, **characterized in that** they can be obtained by mixing together at ambient temperature, under agitation, an aqueous acid silica sol in which the silica is in the form of individualized particles, with an average diameter between 5 and 100 nm, not linked together with siloxane bonds, said sol containing the chosen quantity of vinylsilane of formula (I) and the desired quantity of tripropyleneglycol diacrylate and isopropyl alcohol, then by subjecting this mixture to a distillation under reduced pressure and under agitation, at a temperature of less than 50°C until elimination of the water and volatile solvents.

6. Preparation process for a composition according to any one of claims 1 to 5, **characterized in that** the following are mixed together at ambient temperature and under agitation: an aqueous acid silica sol containing the desired quantity and grade of silica, the chosen quantity of vinylsilane of formula (I), the desired quantity of tripropylene glycol diacrylate and isopropyl alcohol, then **in that** this mixture is subjected to a distillation under reduced pressure and under agitation, at a temperature of less than 50°C until elimination of the water and volatile solvents.

7. Process according to claim 6, **characterized in that** the aqueous silica sol has a pH of 1 to 3.

8. Use of a composition according to any one of claims 1 to 5 for the manufacture of transparent and colorless coatings which protect against abrasion, obtained by radical polymerization, by radiation or thermally.

9. Use of a composition according to any one of claims 1 to 5 for the manufacture of transparent and colorless anti-scratch varnishes obtained by radicular polymerization, by radiation or thermally.